# EUROPÄISCHE PATENTSCHRIFT

(11) **EP 2 769 116 B1**
(45) Veröffentlichungstag und Bekanntmachung des Hinweises auf die Patenterteilung: **23.01.2019**
(21) Anmeldenummer: 12770059.9
(22) Anmeldetag: 26.09.2012
(51) Int. Cl.: F16F 15/134, F16F 15/14

(54) **ANTRIEBSSYSTEM FÜR EIN FAHRZEUG**
DRIVE SYSTEM FOR A VEHICLE
SYSTÈME DE PROPULSION POUR UN VÉHICULE

(30) Priorität: 19.10.2011 DE 102011084744
(43) Veröffentlichungstag der Anmeldung: 27.08.2014
(73) Patentinhaber: ZF Friedrichshafen AG, 88046 Friedrichshafen (DE)
(72) Erfinder: KOPP, Mathias, 96050 Bamberg (DE); SCHIERLING, Bernhard, 97273 Kürnach (DE); TRAUT, Michael, 98693 Ilmenau (DE)
(86) Internationale Anmeldenummer: PCT/EP2012/068897
(87) Internationale Veröffentlichungsnummer: WO 2013/056948

(56) Entgegenhaltungen:
- DE-A1- 10 018 955
- DE-A1- 19 954 273
- DE-A1-102009 030 971

## Beschreibung

Die vorliegende Erfindung betrifft ein Antriebssystem für ein Fahrzeug, umfassend eine Brennkraftmaschine und eine Drehschwingungsdämpfungsanordnung, wobei die Drehschwingungsdämpfungsanordnung eine vorzugsweise mit einer Kurbelwelle gekoppelte Primärseite und eine gegen die Wirkung einer Dämpferelementenanordnung bezüglich der Primärseite drehbare Sekundärseite umfasst, wobei die Dämpferelementenanordnung wenigstens zwei Dämpferstufen umfasst, wobei eine erste Dämpferstufe mit geringerer Steifigkeit im Wesentlichen in einem ersten Relativdrehwinkelbereich zwischen Primärseite und Sekundärseite und eine zweite Dämpferstufe mit größerer Steifigkeit im Wesentlichen in einem zweiten Relativdrehwinkelbereich zwischen Primärseite und Sekundärseite wirksam ist, ferner umfassend wenigstens eine Auslenkungsmassenpendeleinheit mit einem Auslenkungsmassenträger und einer durch eine Auslenkungsmassenkopplungsanordnung an dem Auslenkungsmassenträger bezüglich diesem aus einer Grund-Relativlage auslenkbar getragenen Auslenkungsmassenanordnung.

Die DE 100 18 955 A1 zeigt ein Schwingungsdämpfungssystem mit einer Primärseite und einer gegen die Wirkung einer Dämpferelementenanordnung bezüglich der Primärseite drehbaren Sekundärseite. Die Dämpferelementenanordnung kann mehrere Dämpferfedern umfassen, die unterschiedliche Federkonstanten aufweisen können, um so mehrere Dämpferstufen zu bilden. Der Übergang zwischen zwei Dämpferstufen erfolgt bei einer Drehzahl von ca. 1000 Umdrehungen pro Minute.

Die DE 10 2009 030 971 A1 betrifft eine Drehmomentenübertragungseinrichtung mit mindestens einem Drehschwingungsdämpfer. Der Drehschwingungsdämpfer umfasst ein entgegen der Wirkung der Energiespeichereinrichtung gegenüber einem Eingangsteil begrenzt verdrehbares Ausgangsteil. An dem Ausgangsteil ist eine Fliehkraftpendeleinrichtung angebracht.

Aus der DE 199 54 273 A1 ist eine Schwingungsdämpfungsvorrichtung für ein Antriebssystem eines Fahrzeugs vorbekannt. Diese umfasst einen um eine Drehachse drehbaren Grundkörper und eine Auslenkungsmassenanordnung mit wenigstens einer Auslenkungsmasse und einer dieser zugeordneten Auslenkungsbahn. Die Auslenkungsmasse kann sich entlang der Auslenkungsbahn bei Drehung des Grundkörpers um die Drehachse bewegen.

Die DE 10 2009 042 825 A1 zeigt ein Antriebssystem für ein Fahrzeug. Bei diesem bekannten Antriebssystem ist die Primärseite der Drehschwingungsdämpfungsanordnung an die Kurbelwelle einer Brennkraftmaschine angebunden. Die Sekundärseite der Drehschwingungsdämpfungsanordnung ist mit einer Auslenkungsmassenpendeleinheit verbunden. Zwischen der Sekundärseite und der Primärseite wirken zwei serielle Dämpferstufen, die bei dieser bekannten Ausgestaltungsform radial ineinander geschachtelt angeordnet sind. Die Auslenkungsmassenpendeleinheit ist als Fliehkraft-Masse-Pendeleinheit, also als so genannter drehzahladaptiver Tilger, ausgebildet. Dieser ist auf eine bestimmte Anregungsordnung, beispielsweise abgestimmt auf die Zündfrequenz der Brennkraftmaschine, ausgelegt. Durch die beiden radial ineinander geschachtelten Dämpferstufen einer zwischen der Primärseite und der Sekundärseite wirkenden Dämpferelementenanordnung wird ein zweistufiges Verhalten der Drehschwingungsdämpfungsanordnung erreicht, bei welcher bei Anliegen eines Übergangs-Drehmoments an der Primärseite von einer ersten, im Allgemeinen weicheren Dämpferstufe, in eine zweite, im Allgemeinen steifere Dämpferstufe übergegangen wird.

Es ist die Aufgabe der vorliegenden Erfindung, ein Antriebssystem für ein Fahrzeug vorzusehen, welches eine erhöhte Entkopplungsgüte zwischen der Primärseite und der Sekundärseite bereitstellt.

Erfindungsgemäß wird diese Aufgabe gelöst durch ein Antriebssystem für ein Fahrzeug, umfassend eine Brennkraftmaschine und eine Drehschwingungsdämpfungsanordnung, wobei die Drehschwingungsdämpfungsanordnung eine vorzugsweise mit einer Kurbelwelle gekoppelte Primärseite und eine gegen die Wirkung einer Dämpferelementenanordnung bezüglich der Primärseite drehbare Sekundärseite umfasst, wobei die Dämpferelementenanordnung wenigstens zwei Dämpferstufen umfasst, wobei eine erste Dämpferstufe mit geringerer Steifigkeit im Wesentlichen in einem ersten Relativdrehwinkelbereich zwischen Primärseite und Sekundärseite und eine zweite Dämpferstufe mit größerer Steifigkeit im Wesentlichen in einem zweiten Relativdrehwinkelbereich zwischen Primärseite und Sekundärseite wirksam ist, ferner umfassend wenigstens eine Auslenkungsmassenpendeleinheit mit einem Auslenkungsmassenträger und einer durch eine Auslenkungsmassenkopplungsanordnung an dem Auslenkungsmassenträger bezüglich diesem aus einer Grund-Relativlage auslenkbar getragenen Auslenkungsmassenanordnung.

Dabei ist weiter vorgesehen, dass ein zur Erzeugung eines Übergangs vom ersten Drehwinkelbereich zum zweiten Drehwinkelbereich anzulegendes Übergangs-Drehmoment einem bei einer Übergangs-Drehzahl von der Brennkraftmaschine maximal abgebbaren Drehmoment entspricht, wobei die Übergangs-Drehzahl im Bereich einer Maximalmomentendrehzahl liegt, bei welcher die Brennkraftmaschine ihr Maximaldrehmoment abgeben kann.

Während bei bekannten zwei- bzw. mehrstufig arbeitenden Drehschwingungsdämpfungsanordnungen der Übergang von einer ersten in eine zweite Dämpferstufe im Allgemeinen relativ kurz über der Leerlaufdrehzahl vollzogen wird, um die erste Dämpferstufe als Startstufe nutzen zu können, welche eine ausreichende Entkopplung nahe der Leerlaufdrehzahl und somit insbesondere auch eine unter der Leerlaufdrehzahl liegende Eigenfrequenz bereitstellt, ist der Übergang zwischen den beiden Dämpferstufen bei dem erfindungsgemäßen Antriebssystem in einen höheren Drehzahlbereich, insbesondere auch einen nahe bei einer Maximalmomentendrehzahl liegenden Drehzahlbereich verschoben. Damit kann eine im Bereich von Brennkraftmaschinen allgemein beobachtbare Entwicklungstendenz berücksichtigt werden, bei welcher das von einer Brennkraftmaschine abgebbare Maximaldrehmoment bereits bei einer vergleichsweise niedrigen, idealerweise sehr nahe an der Leerlaufdrehzahl liegenden Maximalmomentendrehzahl erreicht wird. Hiermit kann in einem vergleichsweise großen Drehzahlbereich bis zum Übergang in die zweite Dämpferstufe, also die Dämpferstufe mit höherer Steifigkeit, die Drehschwingungsdämpfungsanordnung eine verbesserte Entkopplungsgüte bereitstellen. Im Wirkungsbereich der steiferen, zweiten Dämpferstufe, welche grundsätzlich bei größeren Drehmomenten, im Allgemeinen somit also auch höheren Drehzahlen wirksam ist, kann die Auslenkungsmassenpendeleinheit eine zusätzliche Dämpfungs- bzw. Entkopplungswirkung entfalten, so dass trotz der dann steiferen Kopplung zwischen Primärseite und Sekundärseite auch bei höheren Drehzahlen bzw. größeren Drehmomenten ein verbessertes Schwingungsdämpfungsverhalten gewährleistet werden kann.

Bei einer besonders bevorzugten Ausgestaltung kann vorgesehen sein, dass die Übergangs-Drehzahl im Bereich von 1.000 bis 1.100 U/min liegt.

Wenigstens eine Auslenkungsmassenpendeleinheit kann als Fliehkraft-Masse-Pendeleinheit ausgebildet sein, wobei bei Auslenkung der Auslenkungsmassenanordnung aus der Grund-Relativlage bezüglich des Auslenkungsmassenträgers ein Radialabstand der Auslenkungsmassenanordnung bezüglich einer Drehachse sich verändert. Der besondere Vorteil einer derartigen, allgemein als drehzahladaptiver Tilger bekannten Pendeleinheit liegt darin, dass sie auf eine Anregungsordnung abgestimmt werden kann und mit einer drehzahlabhängig sich verschiebenden Anregung sich dann auch die Eigenfrequenz einer derartigen Pendeleinheit verschiebt, so dass in allen Drehzahlbereichen die hinsichtlich der Schwingungsanregung kritische Anregungsordnung, welche beispielsweise im Zusammenhang mit der Zündfrequenz der Brennkraftmaschine stehen kann, in effizienter Weise eliminiert werden kann.

Dabei kann der Aufbau beispielsweise derart sein, dass an dem Auslenkungsmassenträger oder/und der Auslenkungsmassenanordnung wenigstens eine Führungsbahn mit einem Scheitelbereich vorgesehen ist und dass die Auslenkungsmassenkopplungsanordnung ein entlang der Führungsbahn bewegbares Kopplungsorgan umfasst, wobei bei Auslenkung der Auslenkungsmassenanordnung aus der Grund-Relativlage das Kopplungsorgan sich ausgehend vom Scheitelbereich einer im Auslenkungsmassenträger vorgesehenen Führungsbahn oder/und einer in der Auslenkungsmassenanordnung vorgesehenen Führungsbahn bewegt.

Alternativ oder zusätzlich kann vorgesehen sein, dass wenigstens eine Auslenkungsmassenpendeleinheit als Feder-Masse-Pendeleinheit ausgebildet ist, wobei die Auslenkungsmassenkopplungsanordnung eine bezüglich des Auslenkungsmassenträgers und der Auslenkungsmassenanordnung abgestützte oder abstützbare Federanordnung umfasst. Eine derartige, allgemein als Festfrequenztilger bezeichnete Ausgestaltung einer Auslenkungsmassenpendeleinheit gewährleistet die Dämpfung von mit einer durch die Eigenfrequenz dieser Pendeleinheit im Wesentlichen definierten Schwingungsfrequenz auftretenden Anregungen. Eine derartige Ausgestaltung ist besonders dann vorteilhaft, wenn beispielsweise aufgrund einer sehr niedrigen Maximalmomentendrehzahl die Brennkraftmaschine grundsätzlich im Allgemeinen bei vergleichsweise niedriger Drehzahl betrieben wird und insofern eine als Fliehkraft-Masse-Pendeleinheit ausgebildete Auslenkungsmassenpendeleinheit mangels ausreichender Fliehkraft ihre Wirkung nicht ausreichend entfalten könnte.

Dabei kann beispielsweise vorgesehen sein, dass eine Eigenfrequenz der Feder-Masse-Pendeleinheit im Bereich der Maximalmomentendrehzahl liegt.

Wenigstens eine Auslenkungsmassenpendeleinheit ist vorteilhafterweise der Sekundärseite zugeordnet.

Die erfindungsgemäße Ausgestaltung eines Antriebssystems ist besonders dann vorteilhaft, wenn die Brennkraftmaschine eine Dieselmaschine ist. Derartige Dieselmaschinen werden bei vergleichsweise niedrigen Drehzahlen betrieben bzw. weisen eine vergleichsweise niedrige Maximalmomentendrehzahl auf, so dass grundsätzlich die Möglichkeit besteht, den Übergang zwischen zwei Dämpferstufen der Drehschwingungsdämpfungsanordnungen nahe bei der Maximalmomentendrehzahl bzw. dem dabei von der Brennkraftmaschine maximal abgebbaren Drehmoment zu wählen.

Es sei in diesem Zusammenhang darauf hingewiesen, dass im Sinne der vorliegenden Erfindung eine erste Dämpferstufe und eine zweite Dämpferstufe bzw. diesen jeweils zugeordnete Relativdrehwinkelbereiche zwischen der Primärseite und der Sekundärseite nicht notwendigerweise die ausgehend von einer Neutral-Relativdrehstellung zwischen der Primärseite und der Sekundärseite unmittelbar wirksamen Dämpferstufen sein müssen. So könnten beispielsweise der ersten Dämpferstufe eine oder ggf. mehrere weitere Dämpferstufen vorgeschaltet sein, die bei vergleichsweise geringen zu übertragenden Drehmomenten, beispielsweise im Sinne einer Startdämpfung, wirksam sein können. Auch könnten anschließend an die zweite Dämpferstufe bzw. den dieser zugeordneten zweiten Relativdrehwinkelbereich ein oder mehrere weitere Dämpferstufen bzw. Relativdrehwinkelbereiche vorgesehen sein, beispielsweise um auch die Dämpfung im Bereich von extrem hohen zu übertragenden Drehmomenten, beispielsweise bei Schaltstößen oder Lastwechselschwingungen, noch mehrstufig zu gestalten können. Beispielsweise könnten die im Sinne der vorliegenden Erfindung diskutierten Dämpferstufen, also die erste Dämpferstufe und die zweite Dämpferstufe und der zwischen diesen definierte Übergang als derjenige Wirkungsbereich der Drehschwingungsdämpfungsanordnung betrachtet werden, in welchem auch ein Maximaldrehmoment der Brennkraftmaschine liegt bzw. zu übertragen ist oder beispielsweise auch das Umschalten zwischen den beiden Dämpferstufen bewirkt. Dies bedeutet also, dass beispielsweise das Maximaldrehmoment der Brennkraftmaschine im elastischen Wirkungsbereich entweder der erfindungsgemäß als erste Dämpferstufe zu betrachtenden Dämpferstufe oder der erfindungsgemäß als zweite Dämpferstufe zu betrachtenden Dämpferstufe übertragen wird.

Die vorliegende Erfindung wird nachfolgend mit Bezug auf die beiliegenden Figuren detailliert beschrieben. Es zeigt:
- Fig. 1: eine Axialansicht einer Drehschwingungsdämpfungsanordnung für ein Antriebssystem;
- Fig. 2: in ihren Darstellungen a) bzw. b) den Verlauf eines von einer Brennkraftmaschine maximal abgebbaren Drehmoments über der Drehzahl bzw. den nicht erfindungsgemäßen Übergang zwischen zwei Dämpferstufen;
- Fig. 3: in ihren Darstellungen a) bzw. b) der Fig. 2 entsprechende Darstellungen für einen anderen Drehmomentenverlauf.

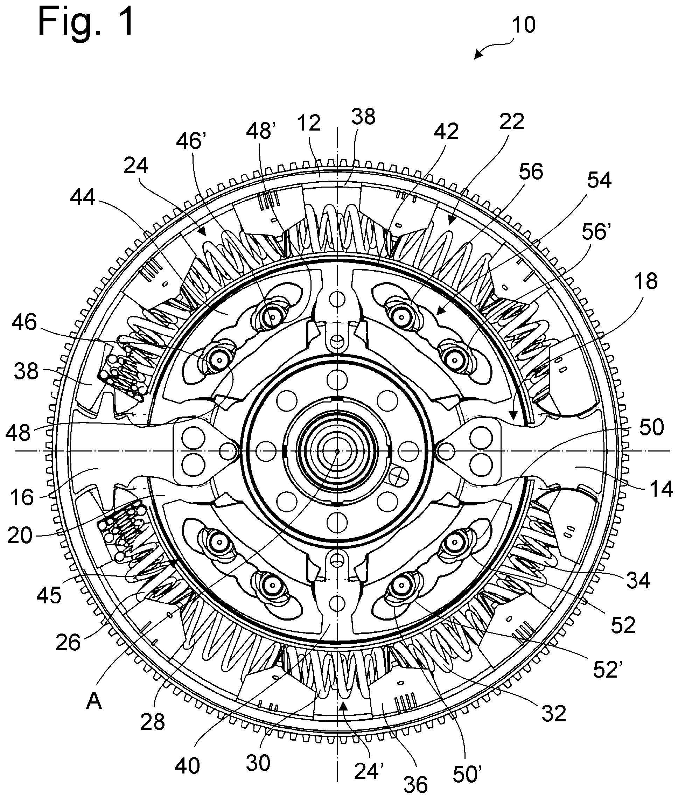

Die Fig. 1 zeigt in axialer Ansicht eine Drehschwingungsdämpfungsanordnung 10, welche grundsätzlich nach Art eines Zweimassenschwungrads aufgebaut ist. Die Drehschwingungsdämpfungsanordnung 10 umfasst eine beispielsweise mit zwei Deckscheibenelementen ausgebildete Primärseite 12, die im Bereich von einem der beiden Deckscheibenelemente beispielsweise durch Verschraubung an eine Brennkraftmaschine, d. h. deren Kurbelwelle, anzubinden ist.

Eine Sekundärseite 18 umfasst ein mit zwei Abstützarmen 14, 16 nach radial außen zwischen die beiden Deckscheibenelemente der Primärseite 12 eingreifendes Zentralscheibenelement. Im dargestellten Ausgestaltungsbeispiel sind die beiden Abstützarme 14, 16 beispielsweise durch Vernietung mit einem ringartigen Trägerelement 20 fest verbunden, das beispielsweise mit weiteren Antriebsstrangkomponenten, beispielsweise einer Reibungskupplung durch Verschraubung oder Vernietung fest verbunden werden kann.

Zwischen der Primärseite 12 und der Sekundärseite 18 wirkt eine allgemein mit 22 bezeichnete Dämpferelementenanordnung. Diese umfasst im dargestellten Beispiel zwei Federeinheiten 24, 24', die grundsätzlich zueinander identisch aufgebaut sein können. Jede der Federeinheiten 24, 24' umfasst in Umfangsrichtung um eine Drehachse A aufeinander folgend mehrere z. B. vorgespannt eingebaute Dämpferfedern 26, 28, 30, 32, 34. In ihren einander unmittelbar benachbart liegenden Endbereichen sind die Dämpferfedern 26, 28, 30, 32, 34 bezüglich einander über beispielsweise als Gleitschuhe ausgeführte Abstützelemente 36 aneinander abgestützt, wobei diese Abstützelemente 36 sich beispielsweise auch nach radial außen an einer an der Primärseite 12 gebildeten Führungsfläche 38 abstützen können. In ihren Umfangsendbereichen sind die Federeinheiten 24, 24' über weitere allgemein als Federteller bezeichnete Abstützelemente 38 an den Abstützarmen 14, 16 der Sekundärseite 18 bzw. entsprechenden Abstützbereichen der Primärseite 12 zur Drehmomentübertragung abgestützt bzw. abstützbar.

Bei Relativdrehung zwischen der Primärseite 12 und der Sekundärseite 18 werden die beiden Federeinheiten 24, 24' jeweils zwischen einem der Abstützarme 14, 16 und den zugeordneten Abstützbereichen der Primärseite 12 komprimiert. Dabei wird durch Auslegung der Steifigkeiten der verschiedenen Dämpferfedern 26, 28, 30, 32, 34 ein mehrstufiger Dämpferbetrieb erreichbar, bei welchem zunächst die jeweils weicheren Dämpferfedern und dann sukzessive Dämpferfedern mit jeweils zunehmender Federkonstante komprimiert werden. Sind beispielsweise die Dämpferfedern 28 der Federeinheiten 24, 24' diejenigen Dämpferfedern, welche die geringste Steifigkeit, also die geringste Federkonstante aufweisen, so werden zunächst diese Federn 28 komprimiert, beispielsweise bis die sie jeweils abstützenden Abstützelemente 36 in gegenseitige Anlage kommen eine weitere Kompression der Federn 28 nicht möglich ist. Darauf folgend werden dann die Federn mit der nächsthöheren Steifigkeit komprimiert.

Zum Aufbau der Dämpferfedern 26, 28, 30, 32, 34 ist weiter auszuführen, dass diese, so wie beispielsweise im Falle der Dämpferfedern 28, als einzelne Federn ausgeführt sein können, oder so, wie beispielsweise bei den Dämpferfedern 26, durch mehrere, hier drei, ineinander liegende Federn gebildet sein können. Weisen diese ineinander geschachtelte Federn beispielsweise zueinander unterschiedliche Längen auf, so können auch hier zunächst die längeren Federn komprimiert werden, so dass auch dadurch in den einzelnen Dämpferfedern selbst bereits eine mehrstufige Wirkungsweise erreicht werden kann.

Grundsätzlich sei jedoch darauf hingewiesen, dass eine Ausgestaltung der Drehschwingungsdämpfungsanordnung 10 mit mehreren Dämpferstufen auch so realisiert sein kann, wie in der eingangs diskutierten DE 10 2009 042 825 A1 mit zwei radial ineinander geschachtelten Dämpferstufen.

An der Sekundärseite 18 ist bei der Drehschwingungsdämpfungsanordnung 10 weiterhin eine allgemein mit 40 bezeichnete Auslenkungsmassenpendeleinheit in Form einer Fliehkraft-Masse-Pendeleinheit, also eines drehzahladaptiven Tilgers, vorgesehen. Die Auslenkungsmassenpendeleinheit 40 umfasst einen Auslenkungsmassenträger 42, welcher beispielsweise bereitgestellt ist durch das die beiden Abstützarme 14, 16 auftragende Trägerelement 20 und ein weiteres in der Zeichnung nicht dargestelltes komplementäres und über den radial inneren Bereichen der Abstützarme 14, 16 liegendes Ringscheibenelement. Zwischen diesen beiden miteinander auch fest verbundenen Scheibenelementen des Auslenkungsmassenträgers 42 liegen im dargestellten Beispiel vier eine Auslenkungsmassenanordnung 45 bereitstellende Auslenkungsmasse 44. In jeder Auslenkungsmasse 44 sind in Umfangsabstand zwei Führungsbahnen 46 bzw. 46' mit radial innen liegendem Scheitelbereich 48, 48' ausgebildet. In Zuordnung zu diesen Führungsbahnen 46, 48 sind in dem Auslenkungsmassenträger 42, also den beiden in Abstand zueinander gehaltenen Scheibenteilen, Führungsbahnen 50, 50' mit radial außen liegendem Scheitelbereich 52, 52' vorgesehen.

Eine allgemein mit 54 bezeichnete Auslenkungsmassenkopplungsanordnung umfasst in Zuordnung zu jeder Auslenkungsmasse 44 zwei bolzenartig ausgebildete Kopplungsorgane 56, 56'. Eines der Kopplungsorgane ist dabei jeweils in Zuordnung zu den Führungsbahnen 46 bzw. 50 vorgesehen, während das andere der Kopplungsorgane in Zuordnung zu den Führungsbahnen 46' und 50' vorgesehen ist.

Bei Fliehkrafteinwirkung und der Tendenz der Auslenkungsmassen 44, sich bezüglich des Auslenkungsmassenträgers 42 möglichst weit radial außen anzuordnen, kommen die Kopplungsorgane 56, 56' in den jeweils ihnen zugeordneten Scheitelbereichen 48, 52 bzw. 48', 52' zu liegen. Dies bedeutet, dass die Auslenkungsmassen 44 in einer Grund-Relativlage bezüglich des Auslenkungsmassenträgers 42 sind, in welcher sie auch ihre am weitesten radial außen liegende Positionierung, also die energetisch günstigste Positionierung einnehmen. Treten Drehschwingungen bzw. Drehungleichförmigkeiten auf, so bewirken die damit einhergehenden Umfangsbeschleunigungen eine Auslenkung der Auslenkungsmassen 44 aus ihrer Grund-Relativlage bezüglich des Auslenkungsmassenträgers 42 in Umfangsrichtung. Aufgrund der Krümmung der einander zugeordneten Führungsbahnen in den Auslenkungsmassen 44 einerseits und dem Auslenkungsmassenträger 42 andererseits wird dadurch eine Verschiebung der Auslenkungsmassen 44 nach radial innen erzwungen, wobei diese im Fliehpotential Energie aufnehmen und zu einer Schwingung angeregt werden.

Durch die Auslegung der Massen der Auslenkungsmassen 44, deren Radialabstand zur Drehachse A und auch die Krümmung der Führungsbahnen 46, 46', 50, 50' wird es möglich, die Auslenkungsmassenpendeleinheit 40 auf eine anregende Ordnung, beispielsweise die erste, zweite oder dritte Ordnung der Zündfrequenz auszulegen. Da selbstverständlich die Zündfrequenz sich mit der Drehzahl ändert, verschiebt sich die anregende Ordnung, wobei aufgrund der mit der Drehzahl auch zunehmenden Fliehkraft sich in entsprechender Weise die Eigenfrequenz der Auslenkungsmassenpendeleinheit 40 verschiebt und somit die Abstimmung auf die anregende Ordnung beibehalten bleibt. Somit kann beispielsweise für den gesamten im Fahrzustand auftretenden Drehzahlbereich einer Brennkraftmaschine eine hinsichtlich ihrer Schwingungsanregung besonders kritische Ordnung beispielsweise der Zündfrequenz eliminiert werden.

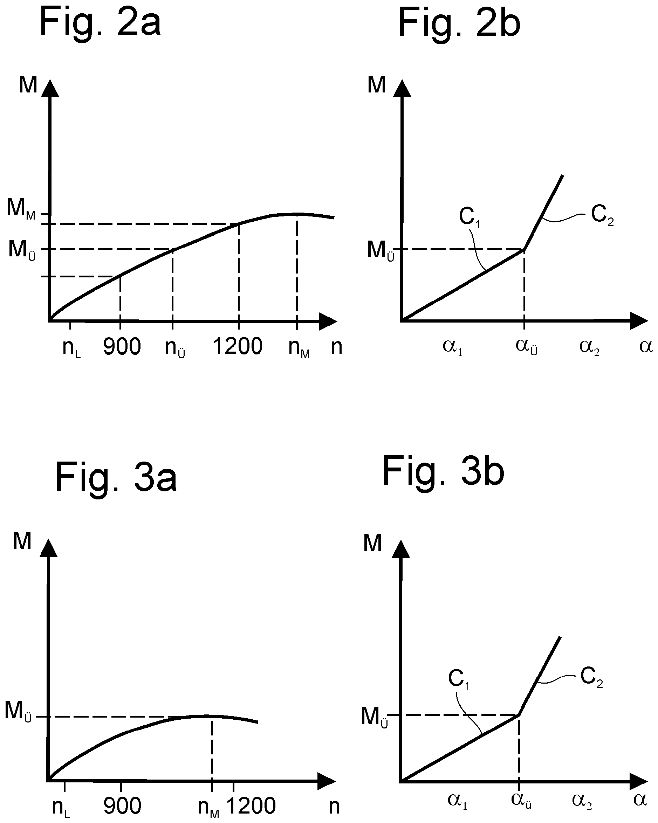

Bei modernen Brennkraftmaschinen, insbesondere Dieselmaschinen, besteht im Allgemeinen die Tendenz, das Maximaldrehmoment derselben in Richtung zu möglichst niedrigen Maximalmomentendrehzahlen zu verschieben. Um insbesondere im Kontext einer derartigen Auslegung moderner Brennkraftmaschinen das Schwingungsdämpfungsverhalten bzw. die Entkopplungsgüte der erfindungsgemäß aufgebauten Drehschwingungsdämpfungsanordnung 10 bzw. eines damit ausgestatteten Antriebssystems weiter verbessern zu können, wird, wie im Folgenden mit Bezug auf die Fig. 2 und 3 anhand verschiedener Auslegungsbeispiele dargelegt, der Übergang zwischen dem Wirkungsbereich zweier Dämpferstufen in spezieller Art und Weise auf die Drehmomentencharakteristik der Brennkraftmaschine abgestimmt. Es sei beispielhaft für die folgende Erläuterung angenommen, dass die im Sinne der vorliegenden Erfindung als zweite Dämpferstufe bezeichnete Dämpferstufe bereitgestellt ist durch die Dämpferfedern 26 der Federeinheiten 24, 24', welche hier gleichzeitig auch die größte Federsteifigkeit, also durch Überlagerung mehrerer Federkennlinien die höchste Federkonstante aufweisen, während die unmittelbar anschließende und im Sinne der vorliegenden Erfindung als erste Dämpferstufe zu betrachtende Dämpferstufe beispielsweise bereitgestellt sein könnte durch die Dämpferfedern 34 der beiden Federeinheiten 24, 24'. Die durch die Dämpferfedern 28, 30 und 32 bereitgestellten Dämpferstufen könnten dann beispielsweise bei noch kleineren Drehmomenten wirksam sein. Gleichwohl sei noch einmal betont, dass beispielsweise auch im Drehmomentenbereich bzw. Wirkungsbereich anschließend an die zweite Dämpferstufe eine oder mehrere noch steifere Dämpferstufen anschließen könnte. Der im Folgenden mit Bezug auf die Fig. 2 und 3 betrachtete Übergang zwischen der Wirksamkeit zweier Dämpferstufen, also beispielsweise bereitgestellt durch die Dämpferfedern 26 und 34, ist derjenige Übergangsbereich, in welchem auch das Maximaldrehmoment der Brennkraftmaschine liegt bzw. übertragen wird.

Bei der auf Fig. 2a), 2b) gezeigten Ausführungsbeispiele handelt es sich nicht um einen Teil der Erfindung, sondern um einen Stand der Technik, der das Verständnis der Erfindung erleichtert.

Die Fig. 2a) zeigt aufgetragen über der Drehzahl n das bei einer jeweiligen Drehzahl von der Brennkraftmaschine im jeweiligen Volllastzustand abgebbare maximale Drehmoment M. Mit n_{L} ist die Leerlaufdrehzahl bezeichnet, wohingegen mit n_{M} die Maximalmomentendrehzahl bezeichnet ist, also diejenige Drehzahl, bei welcher im Volllastzustand die Brennkraftmaschine ihr Maximaldrehmoment M_{M} abgeben kann. Es sei angenommen, dass diese Maximalmomentendrehzahl n_{M} in dem in Fig. 2a) dargestellten Beispiel bei etwa 1300 bis 1400 U/min liegt.

Durch Auslegung der Steifigkeit bzw. Federkonstanten der Dämpferfedern 26 bzw. 34 wird bei einem Übergangswinkel α_{Ü} ein Übergang zwischen einem ersten Relativdrehwinkelbereich α₁, in welchem beispielsweise die Dämpferfedern 26 mit einer Federkonstante C₁ wirksam sind, und einem zweiten Relativdrehwinkelbereich α₂ erreicht, in welchem die Dämpferfedern 34 mit einer größeren Federkonstante C₂, also einer höheren Steifigkeit wirksam sind. Dabei sei noch einmal betont, dass nicht notwendigerweise der erste Relativdrehwinkelbereich α₁ bei der im lastfreien Zustand vorhandenen Grund-Relativdrehlage zwischen der Primärseite 12 und der Sekundärseite 18 beginnen muss.

Durch die Auswahl der Steifigkeiten bzw. Federkonstanten C₁ und C₂ wird erreicht, dass der Übergang bei einem zwischen der Primärseite 12 und der Sekundärseite 18 zu übertragenden Übergangs-Drehmoment M_{Ü} auftritt, welches, wie die Fig. 2a) dies zeigt, unter dem Maximaldrehmoment M_{M} liegt und beispielsweise im Volllastzustand bei einer Übergangs-Drehzahl n_{Ü} erreichbar ist. Diese Übergangsdrehzahl n_{Ü} liegt in dem in Fig. 2 veranschaulichten Beispiel in einem Drehzahlbereich zwischen 900 und 1200 U/min, idealerweise in einem Drehzahlbereich zwischen 1000 und 1100 U/min, jedoch unter der Maximalmomentendrehzahl n_{M}.

Das maximale Drehmoment M_{M} wird bei dieser Auslegung der Drehschwingungsdämpfungsanordnung 10 in der zweiten Dämpferstufe, also im zweiten Relativdrehwinkelbereich α₂ übertragen. Der Übergang zwischen den beiden Dämpferstufen liegt jedoch vergleichsweise nahe bei dem Maximaldrehmoment M_{M}, so dass in einem breiten Bereich der zu übertragenden Drehmomente mit der ersten Dämpferstufe oder ggf. einer noch weicheren Dämpferstufe gearbeitet werden kann und somit eine sehr gute Entkopplungsgüte erreicht werden kann. Bei höheren Drehzahlen, insbesondere also auch dann, wenn im höheren Lastbereich die zweite Dämpferstufe wirksam ist, macht sich das Vorhandensein der der Sekundärseite 18 zugeordneten Auslenkungsmassenpendeleinheit 40 weiter deutlich spürbar, die aufgrund der Tatsache, dass durch die Elastizität der Federeinheiten 24, 24' bereits ein substantieller Teil von Drehungleichförmigkeiten herausgedämpft wurde, dann mit kleineren Auslenkungsmassen und somit auch kleinerer Baugröße bereitgestellt werden kann.

Vor allem dann, wenn die Drehschwingungsdämpfungsanordnung 10 mit nur zwei Dämpferstufen aufgebaut ist, wird somit das Ausdehnen des Wirkungsbereichs der ersten Dämpferstufe über den Bereich um die Leerlaufdrehzahl bzw. dort auftretenden maximalen Drehmomente hinaus ausgedehnt, so dass in einem deutlich vergrößerten ersten Relativdrehwinkelbereich α₁ mit einer geringeren Steifigkeit und somit einer verbesserten Entkopplungsgüte gearbeitet werden kann.

Die Fig. 3a) und 3b) veranschaulichen ein erfindungsgemäßes Ausgestaltungsbeispiel, bei welchem durch entsprechende Auslegung der Federkonstanten C₁ und C₂ der ersten bzw. der zweiten Dämpferstufe, beispielsweise wieder bereitgestellt durch die Dämpferfedern 26 und 34, der Übergang zwischen dem ersten Relativdrehwinkelbereich α₁ und dem zweiten Relativdrehwinkelbereich α₂ bei einem Übergangs-Drehmoment M_{Ü} auftritt, welches dem Maximaldrehmoment der Brennkraftmaschine entspricht, also im Volllastzustand bei der Maximalmomentendrehzahl n_{M} abgegeben wird. Das heißt, dass bis zum Erreichen dieses Maximaldrehmoments bzw. Übergangs-Drehmoments M_{Ü} die erste Dämpferstufe mit ihrer Federkonstante bzw. Steifigkeit C₁ wirksam ist, und dann, wenn die Brennkraftmaschine ihr Maximaldrehmoment M abgibt, ein Übergang in die zweite Dämpferstufe auftritt. Dies hat zur Folge, dass im Wesentlichen im gesamten Drehmomentenspektrum der Brennkraftmaschine mit einer vergleichsweise weichen Kennung im ersten Relativdrehwinkelbereich α₁ gearbeitet werden kann. Nur dann, wenn beispielsweise bei Auftreten von Schaltstößen oder Lastwechselschwingungen das von der Brennkraftmaschine maximal abgebbare Maximaldrehmoment M_{M} überschritten wird, was bis zu einem Faktor von 1,4 der Fall sein kann, wird die zweite Dämpferstufe im zweiten Relativdrehwinkelbereich α₂ wirksam. Im normalen Fahrzustand wird in diesen Relativdrehwinkelbereich auch bei Abgabe des Maximaldrehmoments praktisch nicht eingetreten.

Es sei im Zusammenhang mit der Fig. 3 darauf hingewiesen, dass in dem dort veranschaulichten Beispiel die Maximalmomentendrehzahl n_{M} im Drehzahlbereich zwischen 900 und 1200 U/min liegt, der vorangehend mit Bezug auf die Fig. 2 diskutiert wurde. Es ist selbstverständlich, dass die in Fig. 3 veranschaulichte Auslegung der in Frage stehenden Dämpferstufen selbstverständlich auch bei einem über einer Drehzahl von 1200 U/min liegenden Maximalmomentendrehzahl, beispielsweise in dem in Fig. 2 veranschaulichten Bereich gewählt werden kann. Je näher die Maximalmomentendrehzahl n_{M} jedoch bei der Leerlaufdrehzahl n_{L} liegt, desto enger ist der hinsichtlich der Auslegung zur Verfügung stehende Drehzahlbereich und desto mehr bietet sich die in Fig. 3 gezeigte Auslegung an.

Auch im Zusammenhang mit der Fig. 3 sei ausgeführt, dass selbstverständlich der dort mit dem ersten Relativdrehwinkelbereich α₁ veranschaulichten ersten Dämpferstufe noch eine weitere Dämpferstufe oder ggf. mehrere weitere Dämpferstufen vorgeschaltet sein könnten, beispielsweise zum Bereitstellen einer Startdämpferstufe. Hier definieren sich die erste Dämpferstufe und die zweite Dämpferstufe im Wesentlichen dadurch, dass der Übergang zwischen diesen beiden Dämpferstufen näherungsweise dort auftritt, wo das bei der Maximalmomentendrehzahl N_{M} erzeugbare Maximaldrehmoment n_{M} am Antriebsstrang anliegt. Letztendlich definiert das durch das Maximaldrehmoment M_{M} auch bereitgestellte Übergangs-Drehmoment M_{Ü} den Übergangswinkel α_{Ü} zwischen den beiden Relativdrehwinkelbereichen α₁ und α₂.

Wie bereits ausgeführt, bietet sich die in Fig. 3 veranschaulichte Auslegung vor allem dann an, wenn die Maximalmomentendrehzahl n_{M} vergleichsweise nahe bei der Leerlaufdrehzahl n_{L} liegt. In einem derartigen Antriebssystem, in welchem also die Brennkraftmaschine bereits bei sehr niedriger Drehzahl ihr Maximaldrehmoment M_{M} abgeben kann, wird ein diese Maximalmomentendrehzahl n_{M} substantiell übersteigende Drehzahlbereich im Betrieb praktisch nicht mehr abgerufen werden. Das heißt, Bereiche deutlich höherer Drehzahl werden nicht mehr bzw. mit wesentlich geringerer Häufigkeit genutzt mit der Folge, dass für eine effektive Wirksamkeit höhere Drehzahlen und damit einhergehend eine höhere Fliehkraft erfordernde drehzahladaptive Tilger, im Sinne der vorliegenden Erfindung also Fliehkraft-Masse-Pendeleinheiten, nur beschränkt wirksam ist. Bei dieser Auslegung bzw. Ausgestaltung des Antriebssystems könnte daher alternativ oder zusätzlich zu einer derartigen Fliehkraft-Masse-Pendeleinheit eine als Festfrequenztilger ausgelegte, also als Feder-Masse-Pendeleinheit aufgebaute Auslenkungsmassenpendeleinheit genutzt werden. Bei einem derartigen Aufbau bewegen sich die oder ggf. in eine einzige Auslenkungsmasse gegen die Rückstellewirkung einer elastischen Anordnung, beispielsweise aufgebaut mit Federn oder dergleichen, wobei durch die Auslegung der Federkonstante einerseits und der Massenverhältnisse andererseits eine Abstimmung auf eine bestimmte anregende Frequenz, beispielsweise die Maximalmomentendrehzahl M_{M}, erreicht werden kann. Dies bedeutet, dass bei Übergang in den zweiten Relativdrehwinkelbereich α₂ in einem bestimmten Frequenzband ein derartiger Festfrequenztilger wirksam sein kann, so dass insbesondere bei Auftreten von Lastwechselschwingungen oder Schaltstößen oder dergleichen ein zusätzlicher Aspekt der Schwingungsdämpfung wirksam werden kann.

Es sei abschließend darauf hingewiesen, dass selbstverständlich insbesondere an der Sekundärseite mehrere Auslenkungsmassenpendeleinheiten, beispielsweise ausgebildet als Festfrequenztilger oder ausgebildet als drehzahladaptive Tilger oder Kombinationen davon, vorgesehen sein können.

## Patentansprüche

1. Antriebssystem für ein Fahrzeug, umfassend eine Brennkraftmaschine und eine Drehschwingungsdämpfungsanordnung (10), wobei die Drehschwingungsdämpfungsanordnung (10) eine vorzugsweise mit einer Kurbelwelle gekoppelte Primärseite (12) und eine gegen die Wirkung einer Dämpferelementenanordnung (22) bezüglich der Primärseite (12) drehbare Sekundärseite (18) umfasst, wobei die Dämpferelementenanordnung (22) wenigstens zwei Dämpferstufen (34, 26) umfasst, wobei eine erste Dämpferstufe (34) mit geringerer Steifigkeit im Wesentlichen in einem ersten Relativdrehwinkelbereich (α₁) zwischen Primärseite (12) und Sekundärseite (18) und eine zweite Dämpferstufe (26) mit größerer Steifigkeit im Wesentlichen in einem zweiten Relativdrehwinkelbereich (α₂) zwischen Primärseite (12) und Sekundärseite (18) wirksam ist, ferner umfassend wenigstens eine Auslenkungsmassenpendeleinheit (40) mit einem Auslenkungsmassenträger (42) und einer durch eine Auslenkungsmassenkopplungsanordnung (54) an dem Auslenkungsmassenträger (42) bezüglich diesem aus einer Grund-Relativlage auslenkbar getragenen Auslenkungsmassenanordnung (45), **dadurch gekennzeichnet, dass** ein zur Erzeugung eines Übergangs vom ersten Drehwinkelbereich (α₁) zum zweiten Drehwinkelbereich (α₁) anzulegendes Übergangs-Drehmoment (Mₙ) einem bei einer Übergangs-Drehzahl (n_{Ü}) von der Brennkraftmaschine maximal abgebbaren Drehmoment (M) entspricht, wobei die Übergangs-Drehzahl (n_{Ü}) im Bereich einer Maximalmomentendrehzahl (n_{M}) liegt, bei welcher die Brennkraftmaschine ihr Maximaldrehmoment (M_{M}) abgeben kann.

2. Antriebssystem nach Anspruch 1, **dadurch gekennzeichnet, dass** die Übergangs-Drehzahl (n_{Ü})im Bereich von 1.000 bis 1.100 U/min liegt.

3. Antriebssystem nach einem der Ansprüche 1 oder 2, **dadurch gekennzeichnet, dass** wenigstens eine Auslenkungsmassenpendeleinheit (40) als Fliehkraft-Masse-Pendeleinheit ausgebildet ist, wobei bei Auslenkung der Auslenkungsmassenanordnung (45) aus der Grund-Relativlage bezüglich des Auslenkungsmassenträgers (42) ein Radialabstand der Auslenkungsmassenanordnung (45) bezüglich einer Drehachse (A) sich verändert.

4. Antriebssystem nach Anspruch 3, **dadurch gekennzeichnet, dass** an dem Auslenkungsmassenträger (42) oder/und der Auslenkungsmassenanordnung (45) wenigstens eine Führungsbahn (46, 46', 50, 50') mit einem Scheitelbereich (48, 48', 52, 52') vorgesehen ist und dass die Auslenkungsmassenkopplungsanordnung (54) ein entlang der Führungsbahn (46, 46', 50, 50') bewegbares Kopplungsorgan (56, 56') umfasst, wobei bei Auslenkung der Auslenkungsmassenanordnung (45) aus der Grund-Relativlage das Kopplungsorgan (56, 56') sich ausgehend vom Scheitelbereich (48, 48', 52, 52') einer im Auslenkungsmassenträger (42) vorgesehenen Führungsbahn (50, 50') oder/und einer in der Auslenkungsmassenanordnung (45) vorgesehenen Führungsbahn (46, 46') bewegt.

5. Antriebssystem nach einem der Ansprüche 1 bis 4, **dadurch gekennzeichnet, dass** wenigstens eine Auslenkungsmassenpendeleinheit als Feder-Masse-Pendeleinheit ausgebildet ist, wobei die Auslenkungsmassenkopplungsanordnung eine bezüglich des Auslenkungsmassenträgers und der Auslenkungsmassenanordnung abgestützte oder abstützbare Federanordnung umfasst.

6. Antriebssystem nach Anspruch 5, **dadurch gekennzeichnet, dass** eine Eigenfrequenz der Feder-Masse-Pendeleinheit im Bereich der Maximalmomentendrehzahl (n_{M}) liegt.

7. Antriebssystem nach einem der Ansprüche 1 bis 6, **dadurch gekennzeichnet, dass** wenigstens eine Auslenkungsmassenpendeleinheit (40) der Sekundärseite (18) zugeordnet ist.

8. Antriebssystem nach einem der Ansprüche 1 bis 7, **dadurch gekennzeichnet, dass** die Brennkraftmaschine eine Dieselmaschine ist.

## Claims

1. Drive system for a vehicle, comprising an internal combustion engine and a torsional vibration damping arrangement (10), the torsional vibration damping arrangement (10) comprising a primary side (12) which is preferably coupled to a crankshaft and a secondary side (18) which can be rotated with regard to the primary side (12) counter to the action of a damper element arrangement (22), the damper element arrangement (22) comprising at least two damper stages (34, 26), a first damper stage (34) with a lower stiffness being active substantially in a first relative rotary angle region (α₁) between the primary side (12) and the secondary side (18), and a second damper stage (26) with a greater stiffness being active substantially in a second relative rotary angle region (α₂) between the primary side (12) and the secondary side (18), comprising, furthermore, at least one deflection mass pendulum unit (40) with a deflection mass carrier (42) and a deflection mass arrangement (45) which is supported by way of a deflection mass coupling arrangement (54) on the deflection mass carrier (42) such that it can be deflected with regard to the latter out of a basic relative position, **characterized in that** a transition torque (Mₙ) which is to be applied in order to generate a transition from the first rotary angle range (α₁) to the second rotary angle range (α₁) corresponds to a maximum torque (M) which can be output by the internal combustion engine at a transition rotational speed (n_{Ü}), the transition rotational speed (n_{Ü}) lying in the region of a maximum torque rotational speed (n_{M}), at which the internal combustion engine can output its maximum torque (M_{M}).

2. Drive system according to Claim 1, **characterized in that** the transition rotational speed (n_{Ü}) lies in the range from 1000 to 1100 rpm.

3. Drive system according to either of Claims 1 and 2, **characterized in that** at least one deflection mass pendulum unit (40) is configured as a centrifugal force mass pendulum unit, a radial spacing of the deflection mass arrangement (45) with regard to a rotational axis (A) changing in the case of the deflection of the deflection mass arrangement (45) out of the basic relative position with regard to the deflection mass carrier (42).

4. Drive system according to Claim 3, **characterized in that** at least one guide track (46, 46', 50, 50') with a vertex region (48, 48', 52, 52') is provided on the deflection mass carrier (42) and/or the deflection mass arrangement (45), and **in that** the deflection mass coupling arrangement (54) comprises a coupling member (56, 56') which can be moved along the guide track (46, 46', 50, 50'), the coupling member (56, 56') moving, starting from the vertex region (48, 48', 52, 52') of a guide track (50, 50') which is provided in the deflection mass carrier (42) and/or a guide track (46, 46') which is provided in the deflection mass arrangement (45), in the case of a deflection of the deflection mass arrangement (45) out of the basic relative position.

5. Drive system according to one of Claims 1 to 4, **characterized in that** at least one deflection mass pendulum unit is configured as a spring/mass pendulum unit, the deflection mass coupling arrangement comprising a spring arrangement which is supported or can be supported with regard to the deflection mass carrier and the deflection mass arrangement.

6. Drive system according to Claim 5, **characterized in that** a natural frequency of the spring/mass pendulum unit lies in the region of the maximum torque rotational speed (n_{M}).

7. Drive system according to one of Claims 1 to 6, **characterized in that** at least one deflection mass pendulum unit (40) is assigned to the secondary side (18) .

8. Drive system according to one of Claims 1 to 7, **characterized in that** the internal combustion engine is a diesel engine.

## Revendications

1. Système de propulsion pour un véhicule, comprenant un moteur à combustion interne et un dispositif d'amortissement des vibrations de torsion (10), dans lequel le dispositif d'amortissement des vibrations de torsion (10) comprend un côté primaire (12) couplé de préférence à un vilebrequin et un côté secondaire (18) pouvant tourner par rapport au côté primaire (12) contre l'action d'un agencement d'éléments d'amortisseur (22), dans lequel l'agencement d'éléments d'amortisseur (22) comprend au moins deux étages d'amortisseur (34, 26), dans lequel un premier étage d'amortisseur (34) de moindre raideur est actif essentiellement dans une première plage angulaire (α₁) de rotation relative entre le côté primaire (12) et le côté secondaire (18) et un deuxième étage d'amortisseur (26) de plus grande raideur est actif essentiellement dans une deuxième plage angulaire (α₂) de rotation relative entre le côté primaire (12) et le côté secondaire (18), comprenant en outre au moins une unité oscillante de masse de déviation (40) avec un support de masse de déviation (42) et un agencement de masse de déviation (45) supporté par un dispositif de couplage de masse de déviation (54) sur le support de masse de déviation (42) et pouvant être dévié par rapport à celui-ci à partir d'une position relative de base, **caractérisé en ce qu'**un couple de rotation de transition (Mₙ) à appliquer pour produire une transition de la première plage angulaire de rotation (α₁) à la deuxième plage angulaire de rotation (α₁) correspond à un couple de rotation (M) réalisable au maximum par le moteur à combustion interne à un nombre de tours de transition (n_{Ü}), dans lequel le nombre de tours de transition (n_{Ü}) se situe dans la région d'un nombre de tours de couple maximal (n_{M}) auquel le moteur à combustion interne peut fournir son couple de rotation maximal (M_{M}).

2. Système de propulsion selon la revendication 1, **caractérisé en ce que** le nombre de tours de transition (n_{Ü}) se situe dans la plage de 1000 à 1100 tr/min.

3. Système de propulsion selon une des revendications 1 ou 2, **caractérisé en ce qu'**au moins une unité oscillante de masse de déviation (40) est réalisée sous la forme d'une unité oscillante de masse centrifuge, dans lequel lors d'une déviation de l'agencement de masse de déviation (45) à partir de la position relative de base par rapport au support de masse de déviation (42) une distance radiale de l'agencement de masse de déviation (45) par rapport à un axe de rotation (A) varie.

4. Système de propulsion selon la revendication 3, **caractérisé en ce qu'**il est prévu sur le support de masse de déviation (42) et/ou sur l'agencement de masse de déviation (45) au moins une voie de guidage (46, 46', 50, 50') avec une zone de rebroussement (48, 48', 52, 52') et **en ce que** le dispositif de couplage de masse de déviation (54) comprend un organe de couplage (56, 56') déplaçable le long de la voie de guidage (46, 46', 50, 50'), dans lequel lors d'une déviation de l'agencement de masse de déviation (45) hors de la position relative de base l'organe de couplage (56, 56') se déplace à partir de la zone de rebroussement (48, 48', 52, 52') d'une voie de guidage (50, 50') prévue dans le support de masse de déviation (42) ou/et d'une voie de guidage (46, 46') prévue dans l'agencement de masse de déviation (45).

5. Système de propulsion selon l'une quelconque des revendications 1 à 4, **caractérisé en ce qu'**au moins une unité oscillante de masse de déviation est réalisée sous la forme d'une unité oscillante de masse de ressort, dans lequel le dispositif de couplage de masse de déviation comprend un agencement de ressorts appuyés ou pouvant s'appuyer par rapport au support de masse de déviation et de l'agencement de masse de déviation.

6. Système de propulsion selon la revendication 5, **caractérisé en ce qu'**une fréquence propre de l'unité oscillante de masse de ressort se situe dans la plage du nombre de tours de couple maximal (n_{M}).

7. Système de propulsion selon l'une quelconque des revendications 1 à 6, **caractérisé en ce qu'**au moins une unité oscillante de masse de déviation (40) est associée au côté secondaire (18).

8. Système de propulsion selon l'une quelconque des revendications 1 à 7, **caractérisé en ce que** le moteur à combustion interne est un moteur diesel.
